# EUROPEAN PATENT SPECIFICATION

(11) **EP 2 852 452 B1**
(45) Date of publication and mention of the grant of the patent: **31.08.2016**
(21) Application number: 12722927.6
(22) Date of filing: 02.03.2012
(51) Int. Cl.: B01D 47/10, B01D 53/50, B01D 53/78, B01D 53/92, F23J 15/02

(54) **BOTTOM-UP SCRUBBER**
AUFSTEIGENDER SCHRUBBER
ÉPURATEUR À FLUX ASCENDANT

(30) Priority: 12.01.2012 NO 20120027; 01.03.2012 NO 20120230
(43) Date of publication of application: 01.04.2015
(73) Proprietor: Wärtsilä Moss AS, 1510 Moss (NO)
(72) Inventor: GANNEFORS, Jan Gunnar, N-1516 Moss (NO); CLAUSEN, Per, N-1621 Gressvik (NO)
(74) Representative: Fluges patent as
(86) International application number: PCT/NO2012/050034
(87) International publication number: WO 2013/105862

(56) References cited:
- FR-A1- 2 351 692
- US-A- 3 894 853
- US-A1- 2005 022 667

## Description

### Introduction

The invention relates to an apparatus, a scrubber, for removing impurities, such as sulphur and particles from a gas flow, preferably flue gas from a diesel or oil driven motor.

### Prior art

Flue gas from combustion sources, for instance motors, often contains pollutive matter. Such contaminants may be removed in a cleaning process. Such a cleaning process may be a scrubber. Scrubbers for cleaning flue gases may broadly be divided into two types, so called wet scrubber and dry scrubber. The main purpose for the scrubber is to remove or neutralize sulphur components from the flue gas, especially sulphur oxide. In addition one may often see that, for a wet scrubber, this will remove particulate matter as well, such as heavy metal, PAH (poly aromatic hydrocarbons), soot and sulphur bonded particles which may be pollutive as atmospheric emission. For marine use usually fuel oil, semi refined heavy oil, is used as fuel. Such oil may have a sulphur content of 4 - 5 %. The limit for allowed sulphur in the exhaust is constantly being lowered. From 2015 the exhaust should not contain more than maximum about 22 ppm sulphur or a level corresponding to a level equivalent to the use of fuel containing 0,1% sulphur.
A wet scrubber uses a liquid, a so called scrubber liquid, which is sprayed into the gas flow, preferable sprayed out as a mist, in a way that the gas will pass a thin layer of such a scrubber liquid. Depending of use, a scrubber liquid may be fresh water, sea water, slurry, or for instance gray water onboard ships. Scrubbers used for cleaning exhaust gases from larger combustion engines onboard ships often uses seawater or fresh water as a scrubber liquid.
To remove sulphur from the gas the main principle consists in letting the gas react with water to form sulphuric acid. Sea water has a natural buffering capacity for this amount of sulphuric acid. When fresh water in a closed, re circulating system is used, it is, in lack of natural buffering capacity, added a neutralizing chemical, e.g. sodium hydroxide.
It is important for the purification efficiency that the contact between the scrubber liquid and the gas to be cleaned are as good as possible. Different designs for scrubbers are therefore available.

US7976809B2 describes a scrubber for reduction of sulphur in the exhaust from a marine engine. The Scrubber utilizes fresh water with an additive, NaOH, as a scrubber liquid. The scrubber is a vertical extending tank with one or two liquid spray arrangements with nozzles arranged above the appurtenant packed bed wherein the liquid meets the gas inside and around the packed bed. The exhaust which is wetted by the scrubber liquid passes a demister before the gas is discharged.
The traditional venturi scrubber will take advantage of the venturi bottle neck to increase the separation of particles in a gas that, during the pressure drop after the bottle neck, will bleed off. The gas may be wetted either in or in front of the venturi bottle neck, by wetting the inside walls of the venturi or by spray nozzles. The gas is lead with the gas flow from top and down in a way that the liquid with the impurities may be removed from the bottom of the scrubber.

WO9944722 describes a scrubber which combines a venturi scrubber and a vertical extended "packed-bed" scrubber. The venturi part is incorporated in the scrubber tank or is placed outside the tank in a slightly inclined design. Typical to this is that the gas and the liquid in the venturi part is flowing downwards. Operating today is a similar design with the venturi part horizontally placed outside the tank.

US3769551 describes a packed bed type scrubber for heat and mass transfer between liquid and gas. This may also be used for absorption of gas in liquid. The scrubber liquid is sprayed in upwards with the gas and will meet a number of packed-bed steps. The liquid is sprayed over the packed bed and will here be dispersed well and further meet, and wet the gas. The gas outlet is at the top. The packed bed is working in a combination with wetting of the gas along the scrubber inner wall. The scrubber liquid is removed in the bottom. An embodiment where the scrubber is extended where the gas inlet and outlet is horizontally arranged at the scrubber body and comprising a compact layer. The liquid will work counter current the gas and here, as well, with an outlet for the scrubber liquid in the bottom of the scrubber.

US20100206171A1 describes a desulphurization equipment for exhaust gas from a marine engine with the use of seawater as scrubber liquid. Also in this scrubber of the packed bed type where the scrubber liquid is added above a so called packed bed and the gas is guided counter current relative to the water flow through the packed bed scrubbing step. The scrubber liquid is removed in the bottom of the scrubber. The lower part is used as a cooling step as well. After the scrubber the used scrubbing liquid is directed for the particles to a purifying step and a neutralization step for the formed acid. The gas inlet is in the bottom step either laterally horizontal or vertically through a feeding pipe with a hat to prevent the downwards flowing liquid to flow into the gas inlet pipe.

The above mentioned scrubber designs will have different cleaning efficiencies depending of the velocity and the pressure of the gas and the pressure drop through the scrubber. Externally arranged fans or pumps may be used to force the exhaust through the scrubber. There at often a need for large volumes of water and several steps of wetting the gas. Such designs often becomes space demanding.

WO2009153404 comprise a method and an apparatus for condensing and purifying steam in the exhaust from metallurgical industry. The gas is lead down through a pipe wherein the scrubber liquid is sprayed into the upper part of the pipe obliquely aslant or in a cross direction of the gas flow, then through the venturi scrubber with at least two nozzle groups aslant arranged of the longitudinal direction of the venturi and further through a cascade scrubber and finally the gas pipe ends in a water tub. All the supplied water is then taken out in the bottom and the scrubbing liquid is lead through a droplet separator. The apparatus is space demanding and all of the contaminated water is collected to one outlet.

FR2351692A1 relates to a gas purification process by the addition of a liquid and washing steps by forming a fluidized bed of drops and followed by particle and droplet separation by a rotational gas/liquid stream.

US2005022667A is directed to selective remove large, and potentially abrasive particles from an gas flow from an incinerator and describes a scrubbing system with a pre cleaning step in front of a second scrubber.

The need of less space demanding scrubbers with good efficiency is all over growing. The requirement for purification of the discharged exhaust is continuously tightened up. Onshore the space is necessarily not as important but if the scrubber will be used for instance onboard a ship the available space for the scrubber and the scrubbing arrangement will be limited. Especially the available space will be limited if a scrubber is to be mounted to satisfy the severe limits for pollution from the exhaust gas onboard an existing ship. Onboard a passenger ship the space will already be utilized to the maximum and available space for later installation will be limited and costly. Another aspect to wish for a small and compact installation may be regarding to stability; that one do not wish to place large heavy pipe arrangement high up in the ship.

### Short summary

Present invention gives a solution to the above mentioned problems, and is a wet scrubber (1) according to the definition of claim 1

The scrubber is less space demanding and with good wetting and with a number of scrubber stages one may achieve as good as 0.1% sulphur content in the combustion oil. The number of venturies inside is given by the requirements for both gas to be treated and the desired purification efficiency.

### Figures

The Figures are sketches wherein details may be enlarged or reduced related to other parts of the figures to show details or principles more detailed.

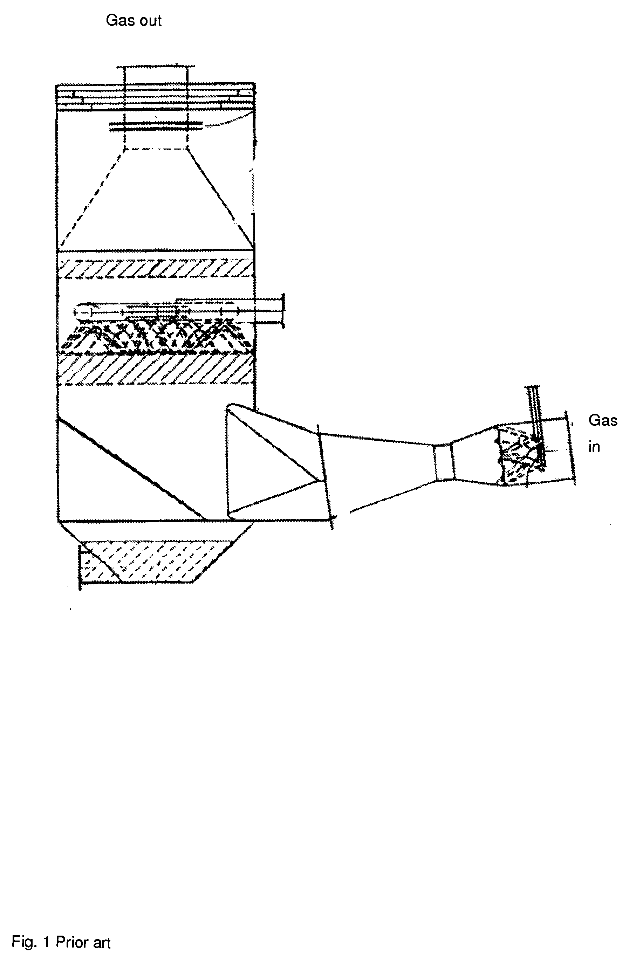

Figure 1 shows a cross section of a wet scrubber according to prior art with a venturi and the gas inlet outside the remaining part of the vertically scrubber body. The gas inlet is more or less perpendicular vertically extended scrubber body and the gas is flowing closed to a horizontal direction.

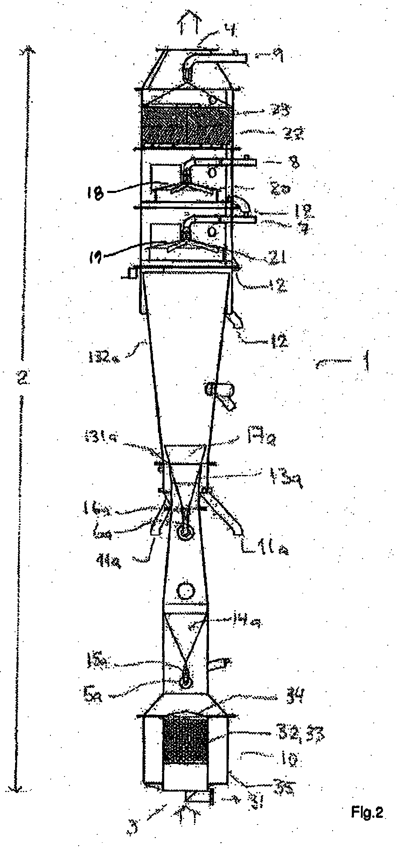

Figure 2 shows a partly sketch and sectional view of a scrubber in an embodiment according to the invention with a gas inlet (3) in the bottom with a water trap (10), a nozzle arrangement (15a) in front of a venturi "bottle neck" (13a) and a nozzle arrangement (16a) inside the "bottle neck". The figure further shows two bubble diffusor arrangement in serial in front of a packed layer arrangement which work as a washing step and a silencer in front of the gas outlet (4) at the top.

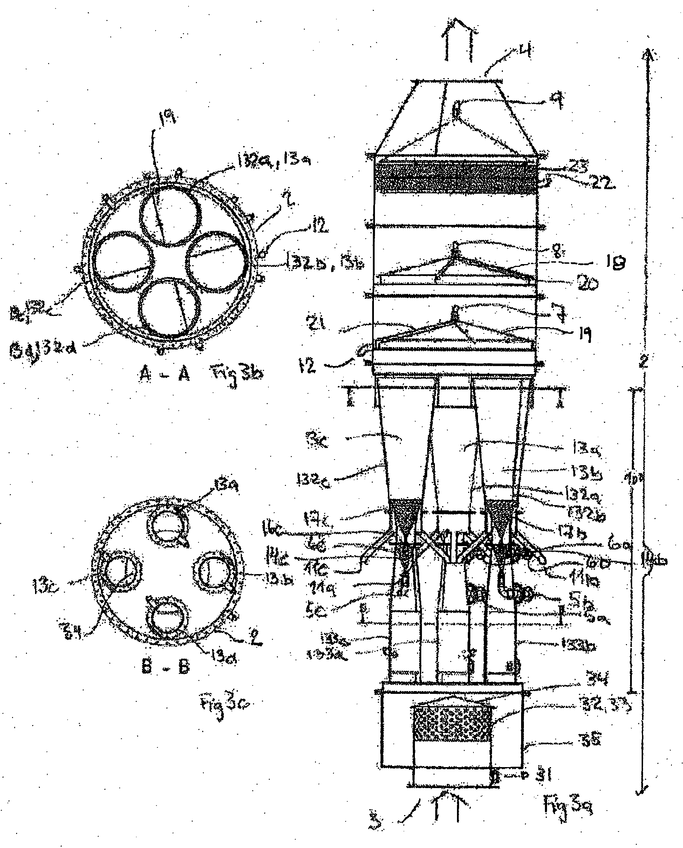

Figure 3a shows a partly sketch and sectional view of a scrubber in an embodiment according to the invention with a plurality of venturies arranged in parallel as a venturi assembly (100)a gas inlet (3) in the bottom with a water trap (10), assembly (100) of venturies comprising an a liquid inlet arrangement (5a) in front of each venturi "bottle neck" (13a b,..) and a liquid inlet arrangement (6a, 6b...) inside the venturi "bottle neck". The figure further shows two bubble diffusor arrangement in serial in front of a packed layer arrangement which work as a washing step and a silencer in front of the gas outlet (4) at the top. The figure is here shown with 4 axial parallel venturies with each appurtenant liquid inlet and outlet, but there should not be limiting the invention, there might me more or less venturi arrangements arranged in the similar way.
Figure 3b shows the section A-A' indicated in Fig.3a. The section cut is seen from beneath and up, seen in the flow direction of the gas, The figure shows the cross section of the surrounding chamber (2) and upper funnel wall (132a, 132b,...) of 4 venturies (13a, 13b ..). The diffusor plate (19) is shown through the upper opening of the venturies.
Figure 3c shows the section B-B' indicated in Fig.3a. The section cut is seen from above and down, in the opposite direction of the gas flow, The figure shows the cross section of the surrounding chamber (2) and the lower funnel wall (133a, 133b,...) of 4 venturies (13a, 13b ..). The overlying hat (34) of the liquid trap (10) is shown through the lower openings of the venturies.

### Embodiments of the invention

The invention is an apparatus, a scrubber, for removing impurities, such as sulphur and particles, NOx (nitrogen dioxide compounds) and particles from a gas flow, preferably flue gas from a diesel or oil driven motor or turbine, primary onboard a marine vessel but in an onshore plant as well. The invention is a wet scrubber (1) according to the definition of claim 1.

In the invention, the wet scrubber comprises (1) a vertical extended body (2) with a venturi (13a), a gas inlet (3), a gas outlet (4), two or more liquid inlets (5a, 6a, 7, 8, 9), two or more liquid outlets (11a, 12, 31 ..) and wherein the characteristic features is that the gas inlet (3) is underlying and the gas outlet (4) is overlying in a way that the gas flow through the venturi (13a) is vertical, monotone upward flowing, that the gas inlet (3), the venturi (13a) and the gas outlet (4) is axial arranged and at least one liquid inlet (5a, 6a) in front of or inside the venturi (13a) is arranged with upwards directed nozzles (15a, 16a) arranged to spray scrubbing liquid (14a,17a)vertically up in the direction of the gas flow.

The invention is dispersing the gas from the inlet over the two or more venturies which are arranged parallel to each other in a way that a partial flow is cleaned in each venturi arrangement and is further flowing into the common cleaning steps. An advantage with more venturies in parallel is the opportunity to adjust the capacity to both the degree of purification and to the amount of gas to be cleaned. More venturies as here may be an advantage when there are large gas volumes to be cleaned. It is not certain that an embodiment with only one venturi may be scaled up unlimited, and it will then be an advantage to part the gas flow to more parallel venturi arrangements in one assembly.

The scrubber according to such embodiments are less space demanding and with good wetting and the possibility to vary the number of scrubber stages one may achieve as good cleaning efficiency as equivalent to 0.1% sulphur content in the fuel. Such a scrubber is especially well fitted for flue gas from heavy oil or diesel combustion motors, for instance onboard a ship. The scrubbing liquid may be fresh water, sea water or so called gray water and so on.
An advantage with the scrubber according to the invention is that has a slender, elongated body so it is easy to lowering into space onboard a ship with limited space for later installation of equipments.
The one or more venturies constitute a venturi scrubber step. A plurality of water outlets above the venturi washing step forms a flexible scrubber when it comes to number of washing steps above the one or more venturies. This also gives a major flexibility in respect to the amount and type of scrubbing liquid used.
The function and the principles of embodiments for every each of the venturies will be mainly identical and the following description relates to a venturi arrangement with numbering according to the embodiment comprising one single venturi arrangement in the scrubber but the same description will be applicable to every each venturi in the embodiment comprising one or more venturies in an assembly of venturies in parallel in one scrubber.
In the invention there will be two upwards directed liquid inlets (5a, 6a) wherein one is placed in front of the venturi "bottle neck" and one inside the venturi "bottle neck". Those steps will perform somewhat different purification. In the first purification step wherein scrubbing liquid (14) is added the water will react with the sulphur in the gas. The total sulphur content in the gas will not be removed in this step and the number of steps will be chosen based on the desired sulphur purification efficiency for the scrubber. The chemistry of SO2 removal in the wet scrubber can be described along the following principles:

SO2 + H2O -> H2SO3 (sulphurous acid)

SO3 + H2O → H2S04 (sulphuric acid)

The sulphurous acid will ionise in water with normal acidity creating bisulphite and sulphite ions:

H2SO3 <-> H+ + HSO3- <-> 2H+ + SO32-

In seawater containing oxygen the sulphite will readily oxidise to sulphate:

SO32- + 1/202 -> SO42-

Also the sulphuric acid will undergo similar reactions:

H2SO4 <-> H+ + HSO4- <-> 2H+ + SO42-

The acidity resulting from these reactions in the scrubbing process is mainly neutralized by the natural buffering capacity in the seawater, given sufficient amounts of water. The buffering capacity in seawater is significantly caused by the content of natural bicarbonate (HCO3-) content.

The next upwards directed cleaning step which is arranged inside the venture is vital to the particle removal. In this cleaning step the dust particles in the gas will condensate to the acids formed in the first cleaning step. It is important with good wetting of the gas in every cleaning step for the best reaction and washing out of sulphur and particles.

The vertically monotone upward directed flow forms a transportation path with less resistance and takes better advantage of the chimney effect then within a bend channel. The upwards directed nozzles in the venturi are cooperating with, and enhance the chimney effect. This secures a god flow through with a low pressure drop.

The wet scrubber according to the invention may be used either with an open water loop or a closed loop. If a closed loop is used the buffering capacity of scrubbing liquid is limited and a suitable neutralization chemical is added. In general when using fresh water as a scrubbing liquid this often will lack buffering capacity. To neutralize the acid which is formed during the sulphur - water reaction a suitable amount of neutralization chemical is added. This might for instance be NaOH (Sodium hydroxide), lime water or a similar alkaline additive and similar reaction mechanisms with Na, Ca, and OH ions will occur.

In an embodiment of the invention the venturi (13a) comprise a drainage aperture (131a) arranged to drain the upper funnel wall (132a) of the venturi and arranged with an underlying liquid outlet (11a). In an embodiment of the invention the wet scrubber according to the invention has liquid outlets (11a, 12, ...) arranged to drain the body (2) after every appurtenant scrubbing step. Different positions for draining the water, gives possibilities for different water loops. These different water loops may have different properties, e.g. different pH with different neutralizing properties. The earliest water drains drain out the most heavily polluted liquid; most of the acid, the most particles etc. It is a great advantage that the water drain may be parted according to degree of pollution. This result for instance in that there will be less liquid for further treatment previous to eventually discharging or other disposal than if larger parts of the used and more or less polluted scrubber liquid should be mixed before further handling.

In an embodiment of the invention with two or more venturies it will be two upwards directing liquid inlets (5a 5b,..., 6a,6b,...) for every venturi arrangement wherein one is placed in front of the venturi "bottle neck" and one inside the venturi "bottle neck". Those steps will perform a somewhat different purification work and similar to those where only one venturi is used. The individual cleaning step is necessarily not directly scale able compared to the use of one simple venturi arrangement. The volume of scrubbing liquid may be varied. The gas to be cleaned is distributed to the two or more venturies and each individual venturi in the scrubber step will purify a partial flow of the gas. The chemistry applicable to the scrubber step is the same whether one or more venturies are used but the mass balance may differ.

In an embodiment of the invention each venturi (13a, 13b, ...) comprise a drainage aperture (131a, 131b, ...) arranged to drain the upper funnel wall (132a, 132b,...) of the one or more venturies and arranged with an underlying liquid outlet (11a, 11b,...). In an embodiment of the invention the wet scrubber according to the invention has liquid outlets (11a, 11b,... 12, ...) arranged to drain the body (2) after every appurtenant scrubbing step. Different positions for draining the water, gives possibilities for different water loops. All the different water loops may have different properties, e.g. different pH with different neutralizing properties. The earliest water drains drain out the mostly heavy polluted liquid; the most acidic liquid, the most particles etc. Here as well, it is a big advantage that the water drain may be parted according to degree of pollution as for the use of one venturi only.

In the invention the wet scrubber according to the invention comprise a water trap (10) arranged between the gas inlet (3) and the one or more upwards directed nozzles (15a, 15b, ..) and with a outlet (31) in a way that the water trap (10) is arranged to prevent dropping liquid into the gas inlet (3). This is substantially for the liquid not to be lead back into the motor.
The water trap (10) comprises in the invention a lower compartment (35) with the gas inlet (3) in the bottom and with a vertical directed cylindrical pipe socket (32) at the gas inlet (3) with radial directed perforations (33) and an overlying hat (34). Here the gas is lead horizontally out through the perforations and further up through the scrubber. Such a water trap has several advantages. The production costs are low, it is light weighted and for the process it has an advantageous low pressure drop. In an embodiment of the invention the cylindrical perforated pipe socket has double walls to secure that water drops do not splash back against the gas flow.

In an embodiment of the wet scrubber according to invention one or more upper liquid inlet (7, 8) are arranged with an appurtenant liquid spray arrangement (20, 21) above an appurtenant diffusor cover (18, 19) and with a liquid spray arrangement (20, 21) arranged to spray water counter current the gas which flows through the diffusor cover (18, 19) and with at least a drainage arrangement with a liquid outlet (12). When the wet scrubber is arranged with such bubble diffusor arrangements one will gain further washing/purification of the gas with simultaneous cooling of the gas to the ambient temperature. In addition the cooling of the gas will prevent the gas to carry over to much liquid to the environment but might rather be recovered or otherwise disposed. Those diffusor arrangements will have a surround proofing effect. The purification steps may have common or separate liquid outlets depending on, for instance, the contamination level in the gas and the water.
The wet scrubber according to an embodiment of the invention has the liquid spray arrangements (20, 21) and the diffusor covers (18, 19) axial arranged with the gas inlet (3), the venturi (13a) and the gas outlet (4) which increases the chimney effect in a gas flow direction as straight as possible.

In an embodiment of the invention the wet scrubber is arranged with a final scrubbing step wherein the liquid inlet (9) is arranged to spray water over a packed layer (22) with a packing material (23), preferably steel, but any material resistant to the conditions which in general is handled by the scrubber may be used. Design and material are selected so as for preventing plugging by impurities. The packed layer (23) is further arranged to catch impurities from the wet gas flowing through. In an advantageous embodiment the scrubber is constructed in corrosion resistant steel. This is a major advantageous due to the fact that it may handle high temperatures and corrosive conditions and therefore the scrubber may run without any by pass, i.e. operate in periods without water and scrubbing effect. When the gas is let out to the environment it may, by the use of an embodiment of the invention, hold a temperature ab. 5 to 30 degrees Celsius higher than the temperature of the scrubber liquid. The exhaust temperature into the scrubber may be in the range of 200 to 500 degrees Celsius.
At such temperatures the steel will undergo a certain linear expansion. Due to the elongated slim body the linear expansion will be dominating in the length direction.

A substantial advantage with such co-current flow gas scrubber according to the invention is that the velocity of the gas will not decrease when meeting the counter current flowing water, but will rather be accelerated by the co-current gas scrubber in the venturi.
In an embodiment of the invention the gas may further be lead to a separate coalescing step from the outlet to remove further water from the wet gas.

All the cleaning steps in the scrubber contributes to a silencing effect and by the use of such a scrubber the need for a separate exhaust box after the motor will be reduced. The elongated slim body may be installed at the space where a potential exhaust box in an existing installation would be and thereby solving a space problem.
Each single component of the scrubber all contributes to a low pressure drop throughout the scrubbers. The scrubber may thus be installed and work without additional fan to accelerate the gas. A substantial advantage of the invention is that it effective purify the gas from the motor driven by diesel or heavy oil and may meet the official requirements for emission to air and water. Those requirements may be met by the use of higher refined product qualities as fuel to, for instance, the motors onboard a marine vessel, but refining of oil brings along another pollution problem, as CO2 emission, during this process. Producing lighter fuel products such as diesel and LNG are 20 - 30% more energy demanding. By using heavier combustion fuels and install an effective scrubber as defined by this invention the total environmental accounts will be more positive than by using lighter combustion fuels.

## Claims

1. A wet scrubber (1) for gas cleaning comprising a vertical extended body (2) with a venturi (13a), a gas inlet (3), a gas outlet (4) two or more liquid inlets (5a, 6a, 7, 8, 9), two or more liquid outlets (11a, 12, 31 ..), said gas inlet (3) is underlying and said gas outlet (4) is overlying in a way that the gas flow through said venturi (13a) is vertical monotone upwards flowing,
- at least one liquid inlet (5a, 6a) is arranged in front of or inside said venturi (13a) arranged with upwards directed nozzles (15a,16a) arranged for spraying scrubbing liquid (14a, 17) vertical upwards in the direction of the gas flow, **characterized in that**
- said gas inlet (3) and said venturi (13a) are axial arranged
- and a water trap (10) with an outlet (31) is arranged between said gas inlet (3) and said one or more upwards directed nozzles (15a, 16a) wherein said water trap (10) is arranged to prevent dropping liquid into said gas inlet (3)
- said water trap (10) comprises a lower compartment (35) with said gas inlet (3) in the bottom and with at least one vertical directed cylindrical pipe socket (32) at said gas inlet (3) with radial directed perforations (33) and an overlying hat (34).

2. A wet scrubber according to claim 1, wherein said venturi (13a) comprises a venturi assembly (100) comprising two or more venturies (13a, 13b, ...) and wherein said gas inlet (3) and the main axis of said venturi assembly (100) are axial arranged.

3. A wet scrubber according to claim 1 or 2, wherein the number of upwards directed liquid inlets (5a, 5b, ..., 6a, 6b, ...) are at least two for at least one of the one or more venturies (13a, 13b ...).

4. A wet scrubber according to one of the preceding claims, wherein said gas outlet (4), said gas inlet (3) and a main axis of the one or more venturies (13a, 13b ...) are axially arranged.

5. A wet scrubber according to one of the preceding claims, wherein said one or more venturies (13a, 13b ...) comprises a drainage aperture (131a, 131b, ...) arranged to drain the upper funnel wall (132a, 132b ...) of the venturi and arranged with an underlying liquid outlet (11a, 11b, ...).

6. A wet scrubber according to one of the preceding claims, wherein said vertical directed cylindrical pipe socket (32) has double walls with perforations (33).

7. A wet scrubber according to claim 6, wherein said lower compartment (35) is arranged as a manifold to said gas inlet (3) for said one or more venturies (13a, 13b ...),

8. A wet scrubber according to one of the preceding claims, wherein one or more upper liquid inlet (7, 8) are arranged with an appurtenant liquid spray arrangement (20, 21) above an appurtenant diffusor cover (18, 19) and with at least a drainage arrangement with a liquid outlet (12).

9. A wet scrubber according to claim 8, wherein said liquid spray arrangements (20, 21) and said diffusor covers (18, 19) are further axially arranged with at least said gas inlet (3) and said venturi (13a).

10. A wet scrubber according to one of the preceding claims, with a terminative scrubber step wherein said liquid inlet (9) is arranged to spray water over a packed layer (22) with a packing material (23) arranged for wetting the gas and capture impurities from the opposite flowing wet gas.

11. A wet scrubber according to one of the preceding claims, wherein the liquid outlets (11a, 11b, ...12, ...) are arranged to drain the body (2) after every appurtenant scrubbing step.

12. A wet scrubber according to one of the preceding claims used for reducing the sulphur content of the gas.

13. A wet scrubber according to one of the preceding claims used for reducing the particle content of the gas.

## Patentansprüche

1. Nasswäscher (1) zur Gasreinigung umfassend eine sich vertikal erstreckenden Gehäuses (2) mit einem Venturibereich (13a), einem Gaseinlass (3), einem Gasauslass (4), zwei oder mehr Flüssigkeitseinlässen (5a, 6a, 7, 8, 9), zwei oder mehr Flüssigkeitsauslässen (11a, 12, 31, ...), wobei
- der Gaseinlass (3) derart untenliegend und der Gasauslass (4) derart obenliegend ist, dass das Gas durch den Venturibereich (13a) vertikal monoton nach oben strömt,
- wenigstens ein Flüssigkeitseinlass (5a, 6a) vor oder in dem Venturibereich (13a) mit nach oben gerichteten Düsen (15a, 16a) zum Einsprühen von Waschflüssigkeit (14a, 17) vertikal nach oben in die Richtung der Gasströmung angeordnet ist,
**dadurch gekennzeichnet, dass**
- der Gaseinlass (3) und der Venturibereich (13a) axial zueinander angeordnet sind,
- und ein Wasserabscheider (10) mit einem Auslass (31) zwischen dem Gaseinlass (3) und der einen oder mehrerer nach oben gerichteten Düsen (15a, 16a) angeordnet ist, wobei der Wasserabscheider (10) zur Vermeidung von Flüssigkeitströpfeln in den Gaseinlass (3) ausgebildet ist,
- wobei der Wasserabscheider (10) am Boden ein unteres Fach (35) mit dem Gaseinlass (3) und wenigstens einen vertikal ausgerichteten zylindrischen Rohrstutzen (32) an dem Gaseinlass (3) mit radial ausgerichteten Perforationen (33) und einer überdeckenden Kappe (34) umfasst.

2. Nasswäscher nach Anspruch 1, wobei der Venturibereich (13a) eine Venturianordnung (100) mit zwei oder mehr Venturibereiche (13a, 13b, ...) umfasst, wobei der Gaseinlass (3) und die Hauptachse der Venturianordnung (100) axial angeordnet sind.

3. Nasswäscher nach Anspruch 1 oder 2, wobei die Anzahl der nach oben gerichteten Flüssigkeitseinlässe (5a, 5b, ..., 6a, 6b, ...) wenigstens zwei für wenigstens einen des einen oder mehrerer Venturibereiche (13a, 13b, ...) ist.

4. Nasswäscher nach einem der vorhergehenden Ansprüche, wobei der Gasauslass (4), der Gaseinlass (3) und eine Hauptachse des einen oder mehrerer Venturibereiche (13a, 13b) axial angeordnet sind.

5. Nasswäscher nach einem der vorhergehenden Ansprüche, wobei der eine oder mehrere Venturibereiche (13a, 13b, ...) eine Drainageapertur (131a, 131b, ...) zum Entleeren der oberen Tunnelwand (132a, 132b, ...) der Venturibereiche mit einer darunterliegenden Flüssigkeitsauslass (11a, 11b, ...) umfasst.

6. Nasswäscher nach einem der vorhergehenden Ansprüche, wobei der vertikal ausgerichtete zylindrische Rohrstutzen (32) Doppelwände mit Perforationen (33) hat.

7. Nasswäscher nach Anspruch 6, wobei das untere Fach (35) als Verteiler von dem Gaseinlass (3) auf den einen oder mehrere Venturibereiche (13a, 13b, ...) ausgebildet ist.

8. Nasswäscher nach einem der vorhergehenden Ansprüche, wobei einer oder mehrere obere Flüssigkeitseinlässe (7, 8) mit einer zugehörigen Flüssigkeitssprüheinrichtung (20, 21) oberhalb einer dazugehörigen Diffusorabdeckung (18, 19) und mit wenigstens einer Drainageanordnung mit einem Flüssigkeitsauslass (21) ausgebildet sind.

9. Nasswäscher nach Anspruch 8, wobei die Flüssigkeitssprüheinrichtungen (20, 21) und die Diffusorabdeckungen (18, 19) weiterhin axial mit wenigstens einem Gaseinlass (3) und dem Venturibereich (13a) angeordnet sind.

10. Nasswäscher nach einem der vorhergehenden Ansprüche, mit einer abschließenden Wäscherstufe, wobei ein Flüssigkeitseinlass (9) zum Sprühen von Wasser über eine Füllkörperlage (22) aus Füllkörpermaterial (23) zum Befeuchten des Gases und zum Einfangen von Verunreinigungen aus dem entgegengesetzt strömenden nassen Gas angeordnet ist.

11. Nasswäscher nach einem der vorhergehenden Ansprüche, wobei die Flüssigkeitsauslässe (11a, 11b, ..., 12, ...) zum Entleeren des Gehäuses (2) nach jeder zugehörigen Wäscherstufe angeordnet sind.

12. Verwendung eines Nasswäschers nach einem der vorhergehenden Ansprüche zur Reduzierung des Schwefelgehalts im Gas.

13. Verwendung eines Nasswäschers nach einem der vorhergehenden Ansprüche zur Reduzierung des Partikelgehalts im Gas.

## Revendications

1. Epurateur par voie humide (1) pour le nettoyage des gaz comprenant un corps (2) s'étendant verticalement avec un tube venturi (13a), une entrée de gaz (3), une sortie de gaz (4), deux ou plusieurs entrées de liquide (5a, 6a, 7, 8, 9), deux ou plusieurs sorties de liquide (11a, 12, 31..),
- ladite entrée de gaz (3) est sous-jacente et ladite sortie de gaz (4) est sus-jacente d'une manière que le flux de gaz s'écoulant à travers ledit tube venturi (13a) est verticalement vers le haut du flux,
- au moins une entrée de liquide (5a, 6a) est agencée à l'avant ou à l'intérieur dudit tube venturi (13a) agencée avec des buses (15a, 16a) dirigées vers le haut agencées pour pulvériser le liquide d'épuration (14a, 17) verticalement vers le haut dans la direction du flux de gaz, **caractérisé en ce que**
- ladite entrée de gaz (3) et ledit tube venturi (13a) sont disposés axialement,
- et un piège à eau (10) avec une sortie (31) est agencée entre ladite entrée de gaz (3) et lesdites une ou plusieurs buses (15a, 16a) dirigées vers le haut dans lequel ledit piège à eau (10) est agencé de manière à éviter de laisser tomber un liquide dans ladite entrée de gaz (3),
- ledit piège à eau (10) comprend un compartiment inférieur (35) avec ladite entrée de gaz (3) dans le fond et avec au moins une tubulure cylindrique (32) dirigée verticalement au niveau de ladite entrée de gaz (3) avec des perforations (33) dirigées radialement et un chapeau (34) de recouvrement.

2. Epurateur par voie humide selon la revendication 1, dans lequel ledit tube venturi (13a) comprend un ensemble à venturi (100) comprenant deux ou plusieurs tubes venturi (13a, 13b, ...) et dans lequel ladite entrée de gaz (3) et l'axe principal dudit ensemble venturi (100) sont agencés axialement.

3. Epurateur par voie humide selon la revendication 1 ou 2, dans lequel le nombre d'entrées de liquide (5a, 5b, 6a, 6b, ...) dirigées vers le haut est au moins deux pour au moins un de l'un ou plusieurs tubes venturi (13a, 13b ...).

4. Epurateur par voie humide selon l'une quelconque des revendications précédentes, dans lequel ladite sortie de gaz (4), ladite entrée de gaz (3) et un axe principal de l'un ou plusieurs tubes venturi (13a, 13b ...) sont agencés axialement.

5. Epurateur par voie humide selon l'une quelconque des revendications précédentes, dans lequel ledit un ou plusieurs tubes venturi (13a, 13b ...) comprend une ouverture de drainage (131a, 131b, ...) agencée pour drainer la paroi de l'entonnoir supérieur (132a, 132b ...) du tube venturi et agencé avec une sortie de liquide (11a, 11b, ...) sous-jacente.

6. Epurateur par voie humide selon l'une quelconque des revendications précédentes, dans lequel ladite tubulure cylindrique (32) dirigée verticalement a des parois doubles avec des perforations (33).

7. Epurateur par voie humide selon la revendication 6, dans lequel ledit compartiment inférieur (35) est agencé en tant que collecteur à ladite entrée de gaz (3) pour ledit un ou plusieurs tubes venturi (13a, 13b, ...).

8. Epurateur par voie humide selon l'une quelconque des revendications précédentes, dans lequel une ou plusieurs entrées (7, 8) supérieures de liquide sont agencées avec un dispositif de pulvérisation de liquide (20, 21) qui s'y rattache au-dessus d'un couvercle de diffuseur (18, 19) qui s'y rattache, et avec au moins un dispositif de drainage avec une sortie de liquide (12).

9. Epurateur par voie humide selon la revendication 8, dans lequel lesdits dispositifs de pulvérisation de liquide (20, 21) et lesdits couvercles de diffuseur (18, 19) sont en outre agencés axialement avec au moins ladite entrée de gaz (3) et ledit tube venturi (13a).

10. Epurateur par voie humide selon l'une quelconque des revendications précédentes, avec une étape finale d'épuration, dans lequel ladite entrée de liquide (9) est agencée de manière à pulvériser de l'eau sur une couche garnie (22) avec un matériau de garnissage (23) agencée pour humidifier le gaz et capturer les impuretés du gaz humide opposé s'écoulant.

11. Epurateur par voie humide selon l'une des revendications précédentes, dans lequel les sorties de liquide (11a, 11b, ... 12, ...) sont agencées pour drainer le corps (2) après chaque étape d'épuration qui s'y rattache.

12. Epurateur par voie humide selon l'une quelconque des revendications précédentes, utilisé pour réduire la teneur en soufre du gaz.

13. Epurateur par voie humide selon l'une quelconque des revendications précédentes, utilisé pour réduire la teneur en particules du gaz.
